# EUROPEAN PATENT APPLICATION

(11) **EP 1 816 720 A2**
(43) Date of publication of application: **08.08.2007**
(21) Application number: 07002533.3
(22) Date of filing: 06.02.2007
(51) Int. Cl.: H02H 3/093

(54) **Electrical switching apparatus, power distribution system, and method employing breakpoint trip**

(30) Priority: 06.02.2006 US 348109
(71) Applicant: Eaton Corporation, Cleveland Ohio 44114-2584 (US)
(72) Inventor: Harry J. Carlino, James, 15632 Westmoreland (US); Todd M. Shaak, Michael, Presto, PA 15142 Allegheny (US); Leondard S. Scheuring, Stephen, 15116 Allegheny (US); James L. Lagree, Leo, Robinson Twp. Pa 15136 Allegheny (US); William E. Beatty, Ellsworth, Beaver, PA 15009 Beaver (US)
(74) Representative: Wagner, Karl H.

(57) **Abstract**

An electrical switching apparatus includes a housing, separable contacts within said housing, an operating mechanism structured to open and close said separable contacts, and a trip assembly cooperating with said operating mechanism to trip open said separable contacts in response to a trip signal. The trip assembly includes a sensor structured to sense current flowing through said separable contacts, a number of breakpoint trip mechanisms providing a number of breakpoint trips in response to a number of time-current functions of said sensed current over a number of ranges of predetermined values of said sensed current, and a mechanism structured to provide said trip signal responsive to said number of breakpoint trips. A method of operating the electrical switching apparatus and a power distribution system incorporating the electrical switching apparatus are also provided.

## Description

### BACKGROUND OF THE INVENTION

### Field of the Invention

This invention is directed to electrical switching apparatus and, more particularly, to circuit interrupters, such as circuit breakers. The invention is also directed to power distribution systems and methods employing electrical switching apparatus.

### Background Information

Electrical switching apparatus include, for example, circuit switching devices and circuit interrupters such as circuit breakers, contactors, motor starters, motor controllers, and other load controllers. Circuit breakers are generally old and well known in the art. Examples of circuit breakers are disclosed in U.S. Pat. Nos. 4,751,606 and 5,341,191. Such circuit breakers are used to protect electrical circuitry from damage due to an overcurrent condition, such as an overload condition or a relatively high level short circuit or fault condition.

Molded case circuit breakers, for example, include separable contacts (e.g., a pair per each phase) which may be operated automatically in response to an overcurrent condition. The separable contacts may also be operated manually by way of a handle disposed on the outside of the circuit breaker. Typically, such circuit breakers include an operating mechanism, which rapidly opens and closes the separable contacts, and a trip assembly, which senses overcurrent conditions. Upon sensing an overcurrent condition, the trip assembly actuates the operating mechanism to a trip position which moves the separable contacts to their open position.

The trip assembly may employ both a microprocessor and a hardware override circuit to detect an overcurrent condition. In response to an overcurrent condition, the microprocessor and/or the hardware override circuit produce various trip signals which actuate the operating mechanism.

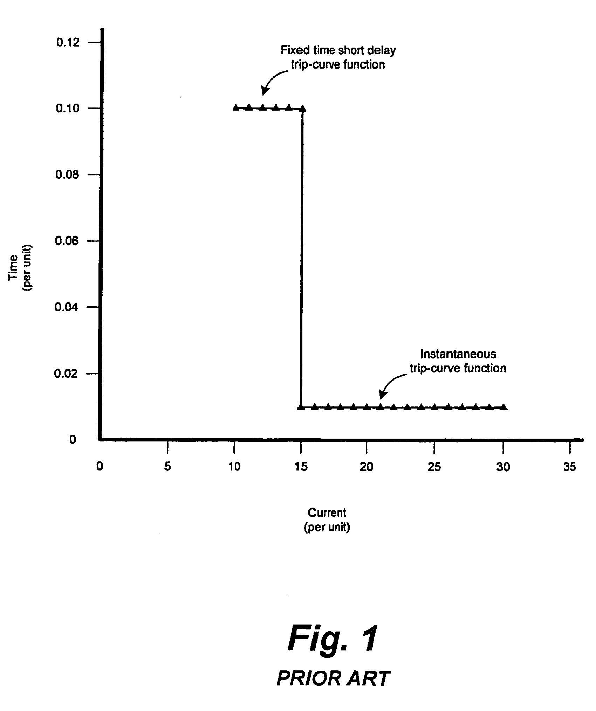

To coordinate the delay times and performance characteristics of one or more circuit interrupters associated with an electrical distribution system, time-trip curves may be employed. Generally, a time-trip curve is a plot of the desired current response characteristics of the circuit interrupter over time. Figure 1, for example, illustrates a portion of a time-trip curve for a circuit breaker. Typically, the time-trip curve includes various types of overcurrent trip conditions, such as a long delay trip, a short delay trip, an instantaneous trip, and/or a ground fault trip. Each type of overcurrent trip condition may be selectively configured in various manners. For example, the short delay trip may be selectively configured as, without limitation, a fixed time response function and/or an I²t response function. For simplicity of illustration, only a fixed time short delay trip-curve function and an instantaneous trip-curve function are shown within the time-trip curves depicted in the figures herein.

Referring to Figure 1, the current factor (per unit) is shown on the horizontal axis and the time factor (per unit) is shown on the vertical axis. When a current factor between about 10 and 15 persists for a time factor of about 0.1 or longer, a short delay trip condition may exist. Accordingly, the circuit breaker processor generates a short delay trip which actuates the operating mechanism, thereby causing the separable contacts to open.

At higher current factors, it is desirable to have the circuit breaker trip more quickly. In this example, an instantaneous trip condition may exist when the current factor reaches about 15 or greater. More specifically, the curve moves from a short delay trip portion to the instantaneous trip portion at a current factor of about 15. As a result, the hardware override circuit generates an instantaneous trip which actuates the operating mechanism causing the circuit breaker to trip more quickly for a current factor of 15 or greater. In this example, it takes a time factor of approximately 0.01 for the instantaneous trip to cause the separable contacts to open.

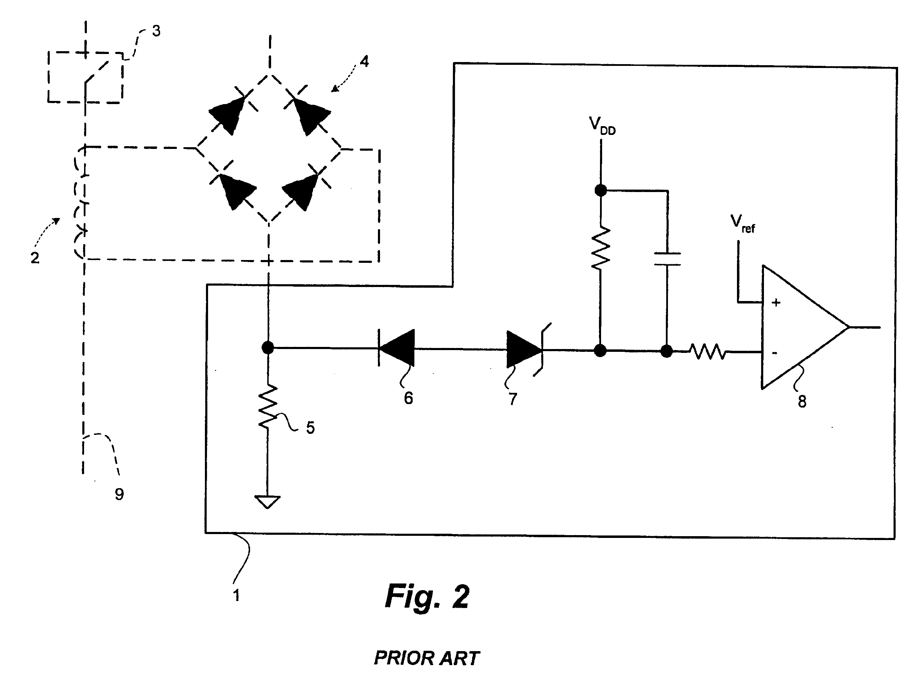

A common hardware override circuit 1 for generating an instantaneous trip signal is illustrated in Figure 2. A current transformer 2 produces a current that is in proportion to the current flowing through the separable contacts 3 of the circuit breaker which are associated with a conductor 9 of a power distribution system. The output of the current transformer 2 is passed through a bridge rectifier circuit 4 and onto the hardware override circuit 1. The current transformer 2, bridge rectifier circuit 4, and hardware override circuit 1 are part of the trip assembly for the circuit breaker. The current output of the bridge rectifier 4 develops a negative voltage across a burden resistor 5 with respect to the hardware override circuit 1 common. When this negative voltage reaches a predetermined value (e.g., when the current factor reaches an instantaneous trip level), a diode 6 becomes forward biased and a zener diode 7 breaks over (i.e., the voltage exceeds the break voltage of the zener diode 7). After breaking over, the zener diode 7 begins to conduct which, in turn, causes the voltage at the inverting input (-) of a comparator 8 to immediately drop to a level which is less than a reference voltage, V_{ref}, which is applied to the non-inverting input (+) of the comparator 8. As a result, the output signal of the comparator 8 changes states, thereby initiating the trip of the circuit breaker by actuating the operating mechanism (not shown) which, in turn, causes the separable contacts 3 to move to their open position.

For some applications, however, it may be desirable to maintain the short delay trip characteristics while delaying the generation of the instantaneous trip signal at higher current factors. When, for instance, a motor is started, inrush currents may exceed a current factor of about 15 for a time factor equal to or greater than 0.01. As a result, a trip assembly employing a hardware override 1 as shown in Figure 2 may sense that an instantaneous trip condition exists and undesirably generate an instantaneous trip which initiates opening of the separable contacts 3. Accordingly, a need exists for a circuit interrupter which effectively delays generation of the instantaneous trip signal for certain current factors.

Depending upon its location within an electric power distribution system, an electrical switching apparatus may be referred to as being "upstream" and/or "downstream" of another electrical switching apparatus. For example, an electrical switching apparatus provided for an intermediate bus may be both downstream of an electrical switching apparatus for a main bus which supplies the intermediate bus, and upstream of an electrical switching apparatus for a distribution circuit which branches from the intermediate bus.

To coordinate the tripping of multiple electrical switching apparatus in a distribution system, some installations employ zone interlocks in which a downstream electrical switching apparatus sensing a fault sends an interlock signal to an upstream electrical switching apparatus. The interlock signal blocks generation of a trip signal by the upstream electrical switching apparatus for a certain amount of time, thereby providing the downstream electrical switching apparatus time to react to the fault. The use of zone interlocks, however, requires additional cabling between, and complicates the operation of, the electrical switching apparatus.

Accordingly, a need exists for an electrical switching apparatus having improved coordination of high current interruptions for use in a distribution system.

### SUMMARY OF THE INVENTION

These needs and others are met by the present invention, which is directed to an electrical switching apparatus comprising a housing, separable contacts within the housing, an operating mechanism structured to open and close the separable contacts, and a trip assembly cooperating with the operating mechanism to trip open the separable contacts in response to a trip signal. The trip assembly comprises a sensor structured to sense current flowing through the separable contacts, a number of breakpoint trip mechanisms providing a number of breakpoint trips in response to a number of time-current functions of the sensed current over a number of ranges of predetermined values of the sensed current, and a mechanism structured to provide the trip signal responsive to the number of breakpoint trips.

As another aspect of the invention, a power distribution system comprises a first bus having a first electrical switching apparatus associated therewith and a second bus having a second electrical switching apparatus associated therewith, the second bus being upstream of the first bus, wherein the electrical switching apparatus of the second bus is associated with a time-trip curve having a number of breakpoint trip-curve functions.

As another aspect of the invention, a method for generating a trip signal in an electrical switching apparatus comprises sensing a current flowing through separable contacts of the electrical switching apparatus, and providing a number of breakpoint trips in response to a number of first time-current functions of the sensed current over a number of ranges of first predetermined values of the sensed current.

### BRIEF DESCRIPTION OF THE DRAWINGS

A full understanding of the invention can be gained from the following description of the preferred embodiments when read in conjunction with the accompanying drawings in which:

Figure 1 is a portion of a time-trip curve for a circuit interrupter.

Figure 2 is a schematic diagram of a hardware override circuit for a circuit interrupter.

Figure 3 is a block diagram in schematic form of circuit interrupter according to the present invention.

Figure 4 is a schematic diagram of a hardware override circuit for the circuit interrupter of Figure 3 according to one embodiment of the present invention.

Figure 5 is a portion of a time-trip curve for a circuit interrupter employing the hardware override circuit of Figure 4.

Figure 6 is a schematic diagram of a hardware override circuit for the circuit interrupter of Figure 3 according to an alternative embodiment of the present invention.

Figure 7 is a portion of a time-trip curve for a circuit interrupter employing the hardware override circuit of Figure 6.

Figure 8 is a block diagram in schematic form of an electric power distribution system employing a number of circuit interrupters according to the present invention.

Figure 9 is a portion of a time-trip curve for a circuit interrupter shown in Figure 8.

Figure 10 is a portion of a time-trip curve for a circuit interrupter shown in Figure 8.

Figure 11 shows the time-trip curves from Figures 5, 9, and 10 superimposed on a single graph.

Figure 12 illustrates a portion of a time-trip curve for one of each different type of circuit interrupter shown in Figure 8 according to another embodiment of the present invention.

Figure 13 illustrates a portion of a time-trip curve for one of each different type of circuit interrupter shown in Figure 8 according to another embodiment of the present invention.

### DESCRIPTION OF THE PREFERRED EMBODIMENTS

As employed herein, the term "number" shall mean one or more than one, and the singular form of "a", "an", and "the" include plural referents unless the context clearly indicates otherwise.

The statement that two or more parts are "connected" or "coupled" together shall mean, as employed herein, that the parts are joined together either directly or joined together through one or more intermediate parts. Further, the statement that two or more parts are "attached" shall mean that the parts are joined together directly.

As employed herein, the statement that a part is "electrically interconnected with" one or more other parts shall mean that the parts are directly electrically connected together or are electrically connected together through one or more electrical conductors or generally electrically conductive intermediate parts. Further, as employed herein, the statement that a part is "electrically connected to" one or more other parts shall mean that the parts are directly electrically connected together or are electrically connected together through one or more electrical conductors.

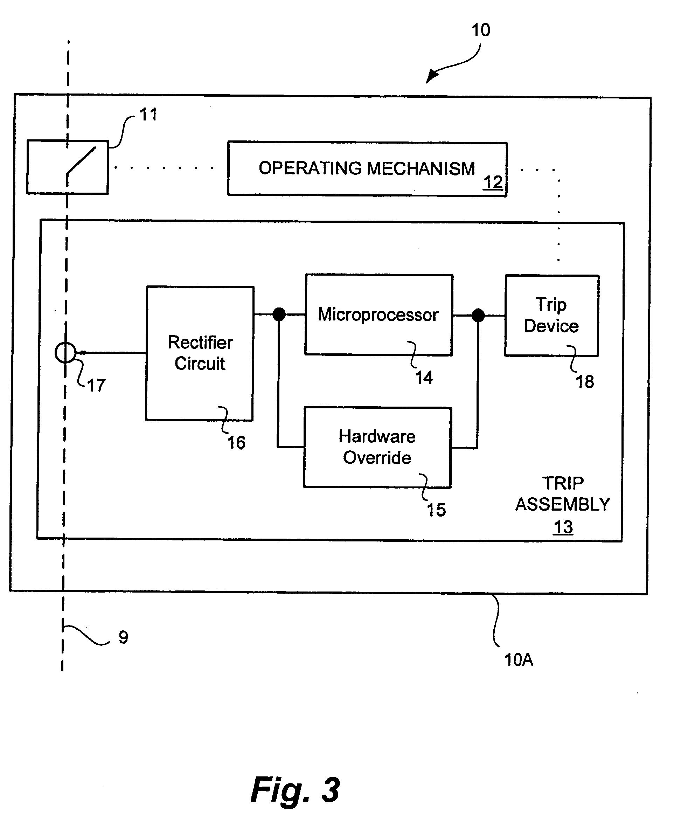

A block diagram in schematic form of a molded case circuit breaker 10 is shown in Figure 3. The circuit breaker 10 includes a housing 10A in which a number of separable contacts 11 (e.g., a pair per each phase or power line) are contained. As shown in Figure 3, separable contacts 11 are associated with a conductor 9 of a power distribution system (only one phase of which is illustrated). The separable contacts 11 may be operated automatically in response to an overcurrent condition. The separable contacts 11 may also be operated manually by way of a handle (not shown) disposed on the outside of the circuit breaker 10. Typically, such circuit breakers 10 include an operating mechanism 12, which rapidly opens and closes the separable contacts 11, and a trip assembly 13, which senses overcurrent conditions. Upon sensing an overcurrent condition, the trip assembly 13 actuates the operating mechanism 12 to a trip position which moves the separable contacts 11 to their open position.

In the current embodiment, trip assembly 13 employs both a microprocessor 14 and a hardware override circuit 15 to detect an overcurrent condition and/or to actuate the operating mechanism 12. As shown in Figure 3, the trip assembly 13 includes a number of sensors such as, and without limitation, a current transformer 17 which provides, to a rectifier circuit 16, a current proportional to the current flowing in conductor 9. The output of the rectifier circuit 16 is provided to both the microprocessor 14 and the hardware override circuit 15. In response to an overcurrent condition, the microprocessor 14 and/or the hardware override circuit 15 produce various trip signals (e.g:, short delay trip; long delay trip; instantaneous trip; breakpoint trip; etc.) which are provided to a trip device 18. The trip device 18, in turn, actuates the operating mechanism 12.

It should be noted that the particular arrangement of devices illustrated in Figure 3 is exemplary and other arrangements, within in the scope of the invention, are contemplated. For example, although discussed as separate components, it is contemplated that the hardware override circuit 15 and the microprocessor 14 may be implemented as a single device, such as and without limitation, an integrated circuit. Also, one or more power lines or phases may be employed.

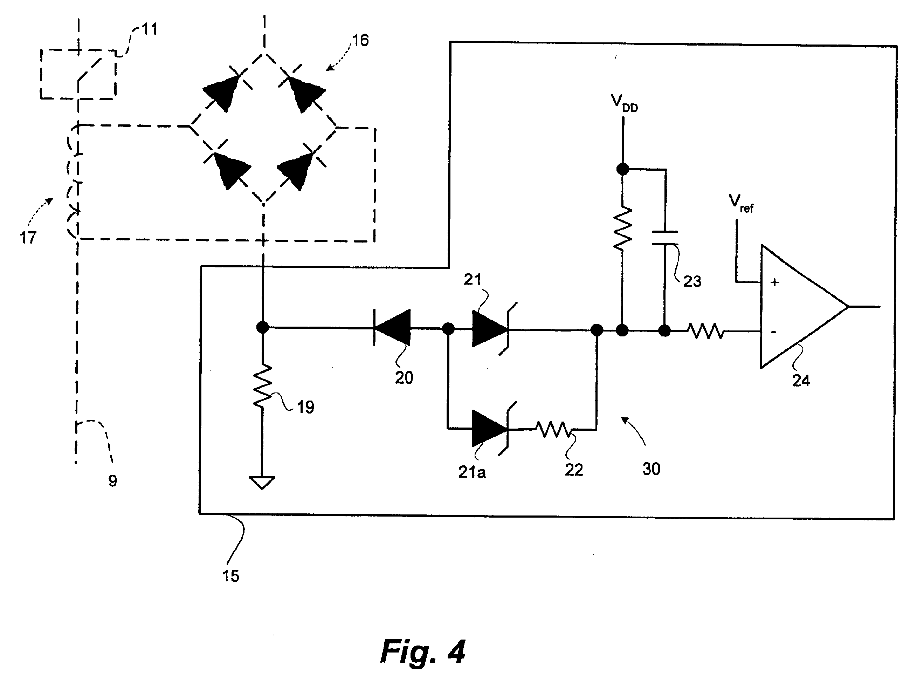

A schematic of the hardware override circuit 15 according to one embodiment of the present invention is illustrated in Figure 4. As discussed above in conjunction with Figure 3, the current transformer 17 produces a current in proportion to the current flowing through separable contacts 11. The output of the current transformer 17 is supplied to bridge rectifier circuit 16. The current output of the bridge rectifier circuit 16 is provided to the hardware override circuit 15, where it develops a negative voltage across a burden resistor 19 with respect to the hardware override circuit 15 common. If the magnitude of this negative voltage is large enough, diode 20 becomes forward biased.

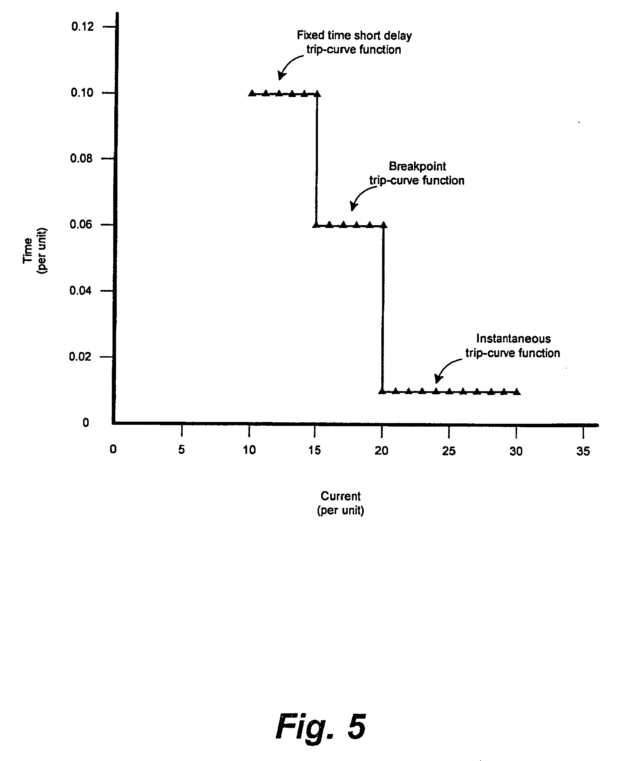

The hardware override circuit 15 employs an array 30 having zener diode 21, zener diode 21 a, and resistor 22. In the exemplary embodiment, zener diode 21 is electrically connected in parallel with the series combination of zener diode 21a and resistor 22. Furthermore, in the exemplary embodiment, the break over voltage for zener diode 21 is greater than the break over voltage of zener diode 21a.
Accordingly, if the negative voltage developed at the burden resistor 19 reaches a first predetermined value, diode 20 becomes forward biased and zener diode 21 a breaks over (i.e., the voltage exceeds the break voltage of the zener diode 21 a). Referring briefly to Figure 5, which shows an exemplary portion of a time-trip curve for the hardware override circuit 15 of Figure 4, diode 21a breaks over at a current factor of about 15 to 20.

As a result of diode 21a breaking over, current flows through resistor 22 which, in conjunction with capacitor 23, delays generation of a trip signal output by comparator 24. As seen in Figure 5, the delay in this example is a time factor of about 0.06. More specifically, resistor 22 and capacitor 23 provide an RC time constant which increases the amount of time that it takes for the voltage at the inverting input (-) of comparator 24 to drop below a reference voltage, V_{ref} (applied at the non-inverting input (+) of comparator 24). Once the voltage at the inverting input (-) of comparator 24 drops below V_{ref}, however, the output signal of the comparator 24, which is provided to the trip device 18 (as shown in Figure 3), changes states; thereby initiating the trip of the circuit breaker 10.

If the negative voltage at burden resistor 19 reaches a second predetermined value, zener diode 21 breaks over (i.e., the voltage exceeds the break voltage of the zener diode 21). Referring briefly to Figure 5, diode 21 breaks over at a current factor of about 20 or greater. After breaking over, the zener diode 21 begins to conduct which, in turn, causes the voltage at the inverting input (-) of a comparator 24 to immediately drop to a level which is less than reference voltage, V_{ref}. As a result, the output signal of the comparator 24, which is provided to the trip device 18 (shown in Figure 3), changes states thereby initiating the trip of the circuit breaker 10 (i.e., within a time factor of about 0.01).

It should be noted that the particular arrangement of devices illustrated in Figure 4 is exemplary and other arrangements, within in the scope of the invention, are contemplated. For example, diode 20 may be omitted from the hardware override circuit 15 while remaining within the scope of the present invention.

Referring to Figure 5, the portion of the time-trip curve between the fixed time short delay trip-curve function and the instantaneous trip-curve function is referred to herein as a "breakpoint trip-curve function". The components of the trip assembly 13 (Figure 3) which provide a breakpoint trip may be referred to as a "breakpoint trip mechanism". In the embodiment illustrated in Figure 4, for example and without limitation, zener diode 21a, resistor 22, capacitor 23, and comparator 24 of hardware override circuit 15 form a breakpoint trip mechanism.

Additionally, the components of the trip assembly 13 which produce an instantaneous trip may be referred to as an "instantaneous trip mechanism". For example, and without limitation, zener diode 21 and comparator 24 of hardware override circuit 15 form an instantaneous trip mechanism. Furthermore, the components of the trip assembly 13 which produce a short delay trip, may be referred to as a "short delay trip mechanism". For example, and without limitation, processor 14 forms a short delay trip mechanism. Furthermore, the components of the trip assembly 13 which produce a long delay trip may be referred to as a "long delay trip mechanism". For example, and without limitation, processor 14 forms a long delay trip mechanism. A number of components of trip assembly 13 may be structured to produce a trip signal (e.g., electrical and/or mechanical) for actuating the operating mechanism 12 in response to one or more of the short delay trip, the breakpoint trip(s), and/or the instantaneous trip. For example, and without limitation, trip device 18 (Figure 3) is structured to produce this trip signal in the present embodiment.

Although the instant embodiment is discussed in conjunction with a short delay trip-curve function and an instantaneous trip-curve function, it should be apparent that the breakpoint trip-curve function of the present invention may be used with any trip-curve functions, alone or in combination. For example, and without limitation, it is contemplated that a circuit breaker may employ a time-trip curve having, in addition to a breakpoint trip-curve portion, any one or more of a long delay trip portion, a short delay trip portion, an instantaneous trip portion, and/or a ground fault trip portion. Furthermore, it is contemplated that one or more of these trip-curve functions may be implemented using various (e.g., thermal; magnetic; instantaneous; etc.) devices while remaining within the scope of the present invention.

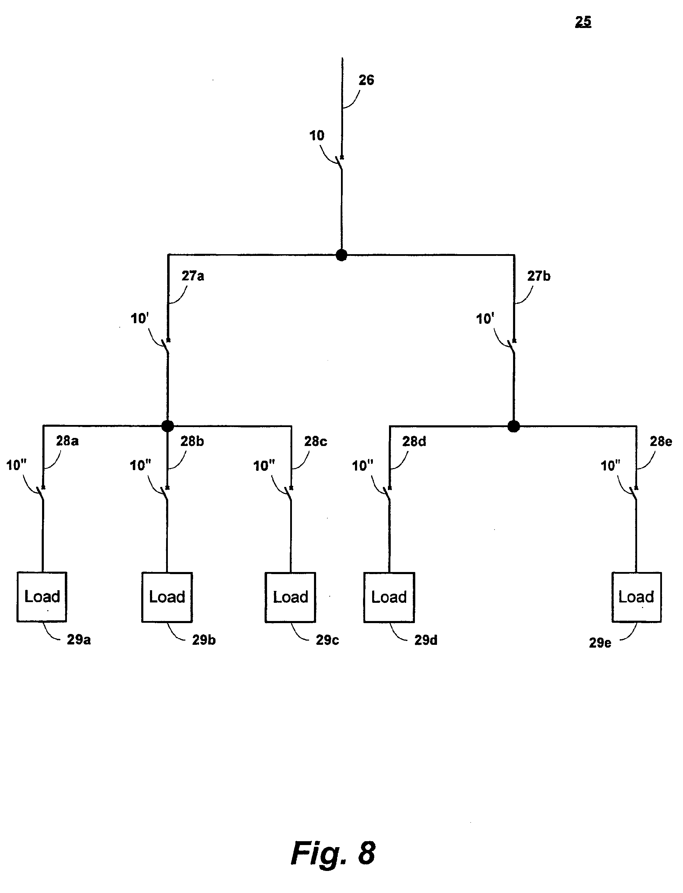

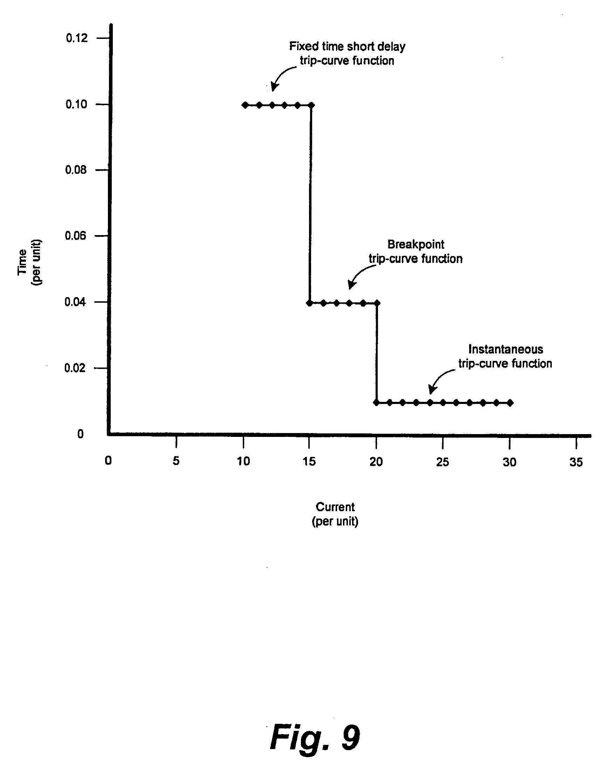

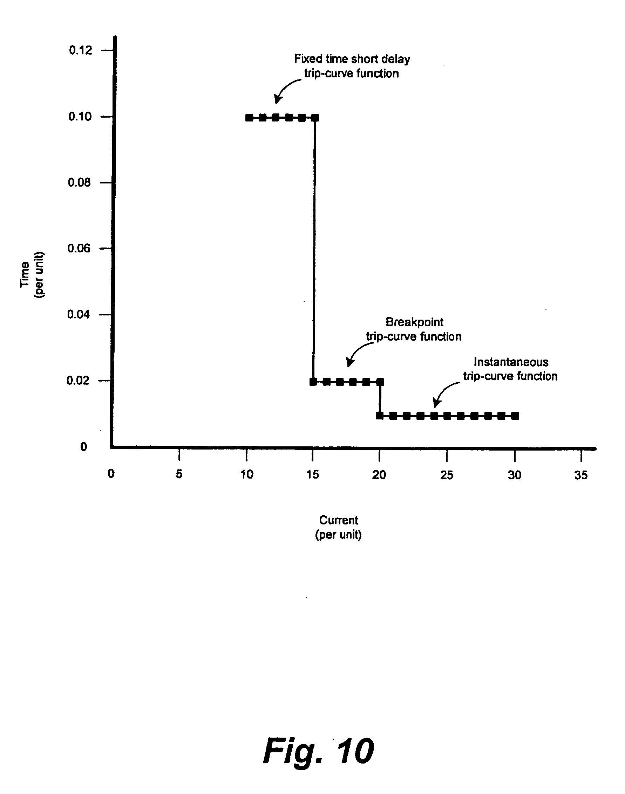

Returning to Figure 4, it should be noted that the amount of delay between when zener diode 21 a breaks over and the output of comparator 24 changes state is selectable by changing the value of resistor 22 and/or the value of capacitor 23. For example, a circuit breaker 10' (Figure 8) having a breakpoint trip-curve function (Figure 9) with a current factor of between about 15 and 20 and a time factor of about 0.04 may be obtained by reducing the resistance of the resistor 22 and/or reducing the capacitance of capacitor 23. Likewise, a circuit breaker 10" (Figure 8) having breakpoint trip-curve function (Figure 10) with a current factor of between about 15 and 20 and a time factor of about 0.02 may be obtained by further reducing the resistance of the resistor 22 and/or the capacitance of capacitor 23. As will be discussed below in conjunction with Figure 8, these circuit breakers (i.e., 10, 10', 10"), each having different overcurrent/time trip characteristics, may be used to coordinate high current interruptions in a power distribution system.

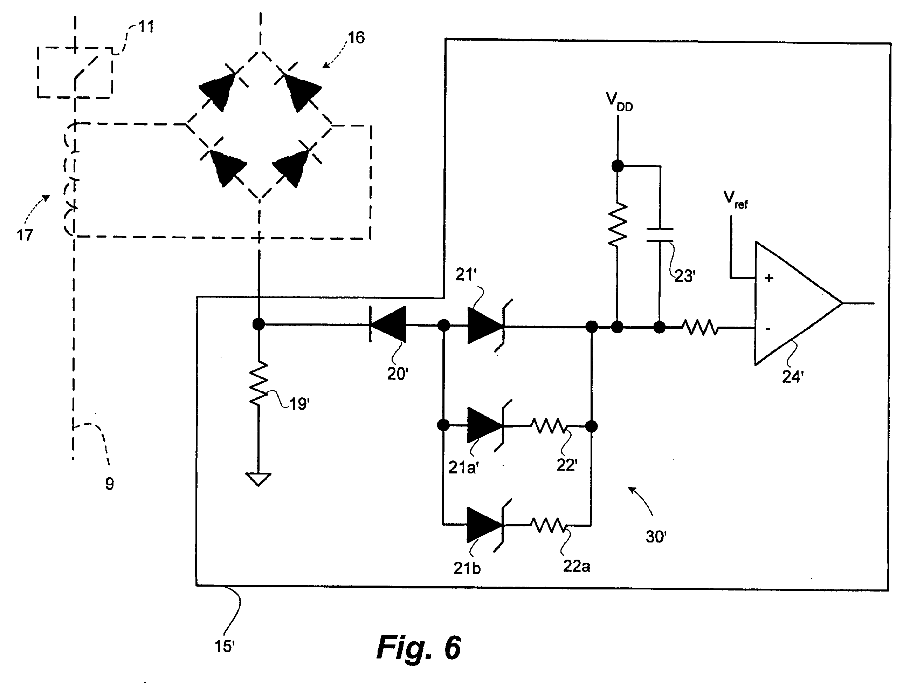

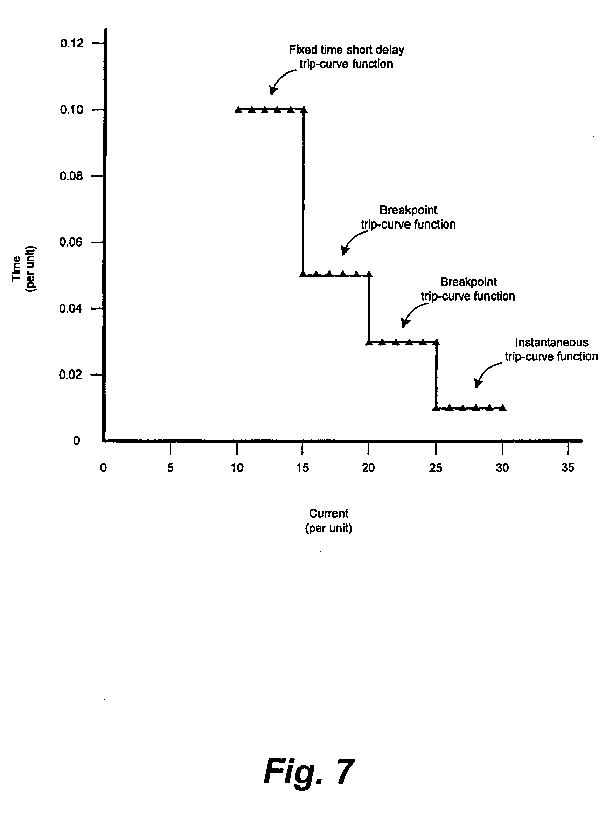

It should further be noted that the time-trip curve may contain (and the hardware override circuit 15 structured to implement) more than one breakpoint trip-curve function. Figure 6, for example, is a schematic diagram of a hardware override circuit 15' for a circuit breaker (not shown) having more than one breakpoint trip-curve function (as shown in Figure 7) according to another embodiment of the present invention. Hardware override circuit 15' may be used, for example and without limitation, to coordinate switching apparatus (not shown) in a power distribution system (not shown).

Hardware override circuit 15' has an array 30' having components which form portions of two breakpoint trip mechanisms. The first breakpoint trip mechanism includes, without limitation, zener diode 21a', resistor 22', capacitor 23', and comparator 24'; the second breakpoint trip mechanism includes, without limitation, zener diode 21 b, resistor 22a, capacitor 23', and comparator 24'. In this embodiment, zener diode 21' is electrically connected in parallel with the series combination of zener diode 21a' and resistor 22', and in parallel with series combination of zener diode 21b and resistor 22a. Although shown with two breakpoint trip mechanisms, any number may be employed while remaining within the scope of the present invention.

In the exemplary embodiment, the break over voltage for zener diode 21' is greater than the break over voltage of zener diode 21a' which voltage, in turn, is greater than the break over voltage of zener diode 21b. Additionally, the resistance value of resistor 22' is less than the resistance value of resistor 22a.

Accordingly, if the negative voltage at burden resistor 19' reaches a first predetermined value, diode 20' becomes forward biased and zener diode 21 b breaks over (i.e., the voltage exceeds the break voltage of the zener diode 21 b). Referring briefly to Figure 7, which is an exemplary portion of a time-trip curve for the hardware override circuit 15' as shown in Figure 6, diode 21b breaks over at a current factor of about 15 to 20. As a result of diode 21 b breaking over, current flows through resistor 22a which, in conjunction with capacitor 23', delays the voltage drop at the inverting input of comparator 24' (and thus, delays generation of the trip signal). As seen in Figure 7, the delay in this example is a time factor of about 0.05. Once the voltage at the inverting input (-) of comparator 24' drops below V_{ref}, however, the output signal of the comparator 24' changes states thereby initiating the trip of the circuit breaker (not shown).

If the negative voltage at burden resistor 19' reaches a second predetermined value, zener diode 21 a' breaks over (i.e., the voltage exceeds the break voltage of the zener diode 21 a'). Referring briefly to Figure 7, diode 21a' breaks over at a current factor of about 20 to 25. As a result of diode 21 a' breaking over, current flows through resistor 22' which, in conjunction with capacitor 23', delays generation of a trip signal. As discussed above, resistor 22' has a resistance value that is less than the resistance value of resistor 22a. Thus, as seen in Figure 7, the delay caused by resistor 22' and capacitor 23' (a time factor of about 0.03 in this example) is less than the delay caused by resistor 22a and capacitor 23'. Once the voltage at the inverting input (-) of comparator 24' does drop below V_{ref}, however, the output signal of the comparator 24' changes states thereby initiating the trip of the circuit breaker.

If the negative voltage at burden resistor 19' reaches a third predetermined value, zener diode 21' breaks over (i.e., the voltage exceeds the break voltage of the zener diode 21'). Referring briefly to Figure 7, diode 21' breaks over at a current factor of about 25 or greater. After breaking over, the zener diode 21' begins to conduct which, in turn, causes the voltage at the inverting input (-) of a comparator 24' to immediately drop to a level which is less than a reference voltage, V_{ref}. As a result, the output signal of the comparator 24' changes states thereby initiating the trip of the circuit breaker (i.e., within a time factor of about 0.01).

It should be noted that the particular arrangement of devices illustrated in Figure 6 is exemplary and other arrangements, within in the scope of the invention, are contemplated. For example, diode 20' may be omitted from the hardware override circuit 15' while remaining within the scope of the present invention

Figure 8 illustrates a typical electric power distribution system 25 having a bus 26 which provides power to a number of other buses 27a, 27b which, in turn, energize a number of other buses 28a - 28e. For clarity, and without limitation, the bus 26 is referred to herein as the "main bus"; the buses 27a - 27b are referred to as "intermediate buses"; and the buses 28a - 28e are referred to as "distribution circuits".

Distribution circuits 28a - 28e provide power to a number of load devices 29a - 29e. Often, power transformers (not shown) step down the voltage at various points in the distribution system 25. An electrical switching apparatus is provided for the main bus 26 (i.e., circuit breaker 10), for at least some, if not all, of the intermediate busses 27a - 27b (i.e., circuit breakers 10'), and for at least some, if not all, of the distribution circuits 28a - 28e (i.e., circuit breakers 10").

Depending upon their location within the distribution system 25, an electrical switching apparatus may be referred to as being "upstream" and/or "downstream" of another electrical switching apparatus. For example, the circuit breaker 10' associated with intermediate bus 27a is both downstream of circuit breaker 10 for main bus 26 and upstream of the circuit breakers 10" associated with distribution circuits 29a - 29c.

Each circuit breaker 10, 10', 10" has its own overcurrent/time trip characteristic for responding to faults in the distribution system 25. These overcurrent/time trip characteristics are coordinated through a hierarchical arrangement in order that only the closest protection device above the fault trips to minimize the interruption to service in the distribution system 25.

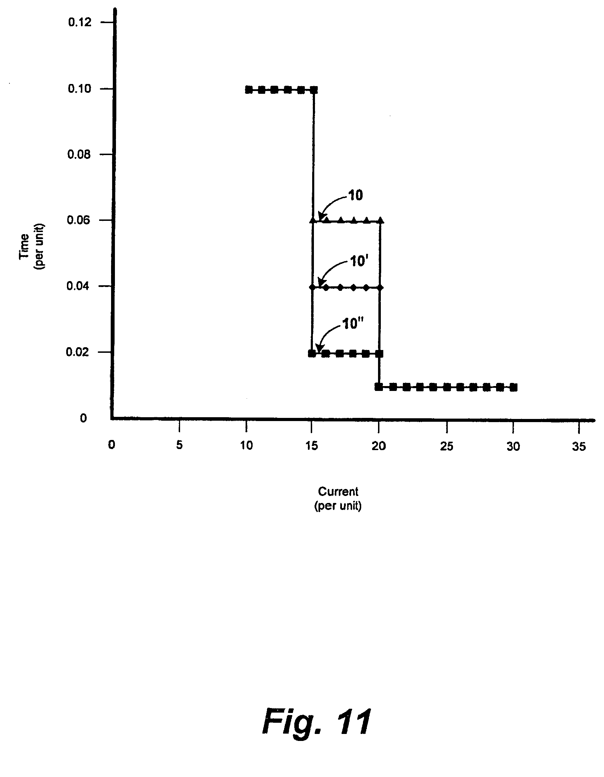

As discussed above, circuit breaker 10 has a breakpoint trip-curve function (Figure 5) with a current factor of between about 15 and 20 and a time factor of about 0.06; circuit breaker 10' has a breakpoint trip-curve function (Figure 9) with a current factor of between about 15 and 20 and a time factor of about 0.04; and circuit breaker 10" has a breakpoint trip-curve function (Figure 10) with a current factor of between about 15 and 20 and a time factor of about 0.02. Figure 11 illustrates the time-trip curve of circuit breaker 10 (Figure 5), the time-trip curve of circuit breaker 10' (Figure 9), and the time-trip curve of circuit breaker 10" (Figure 10) superimposed on a single graph.

Referring to Figure 8, should load 29a develop a high current fault, for example, it is desirable to trip only the circuit breaker 10" associated with distribution circuit 28a (to which load 29a is electrically connected) without tripping the circuit breaker 10' associated with intermediate bus 27a and/or circuit breaker 10 associated with main bus 26. For instance, should the fault at load 29a have a current factor of 18, circuit breaker 10" will trip within a time factor of 0.02. This affords circuit breaker 10" the opportunity to clear the fault associated with load 29a without circuit breaker 10' and/or circuit breaker 10 (which have time factors of 0.04 and 0.06, respectively) tripping. By only tripping the circuit breaker 10" associated with distribution circuit 28a, the power supplied to the other branches (e.g., distribution circuits 28b - 28c) fed by the bus 27a, as well as the power supplied to the intermediate bus 27b fed by the main bus 26, remain uninterrupted. Although not shown, power distribution system 25 may employ a number of circuit breakers at least one of which has a plurality of breakpoint trip mechanisms.

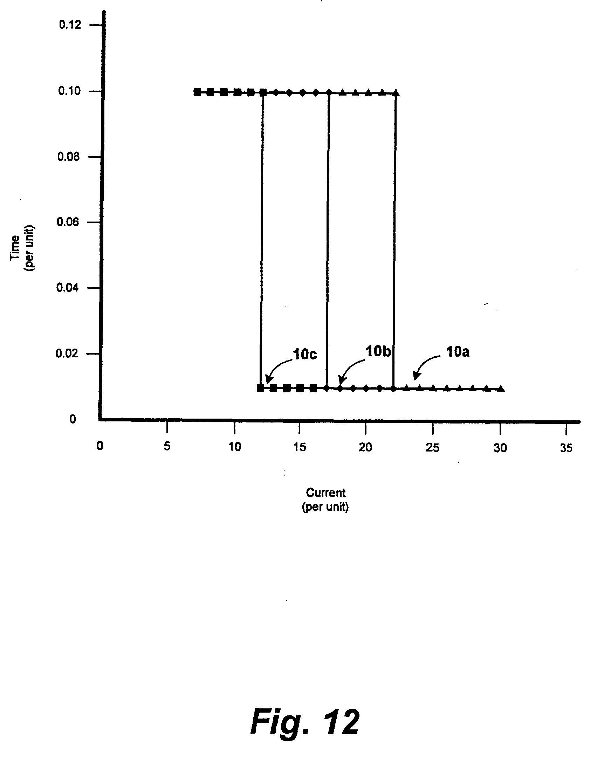

Additionally, the power distribution system 25 may employ a number of circuit breakers which have the same breakpoint delay time factors, but different pick-up current factors. Figure 12, for example, illustrates the time-trip curves of three circuit breakers (10a, 10b, 10c) superimposed on a single graph. As shown in Figure 12, each of these circuit breakers (10a, 10b, 10c) have a breakpoint delay time factor of approximately 0.01, however, circuit breaker 10c picks-up at a current factor of between about 12 and 17, circuit breaker 10b picks-up at a current factor of between about 17 and 22, and circuit breaker 10a picks-up at a current factor of between about 22 and 30.

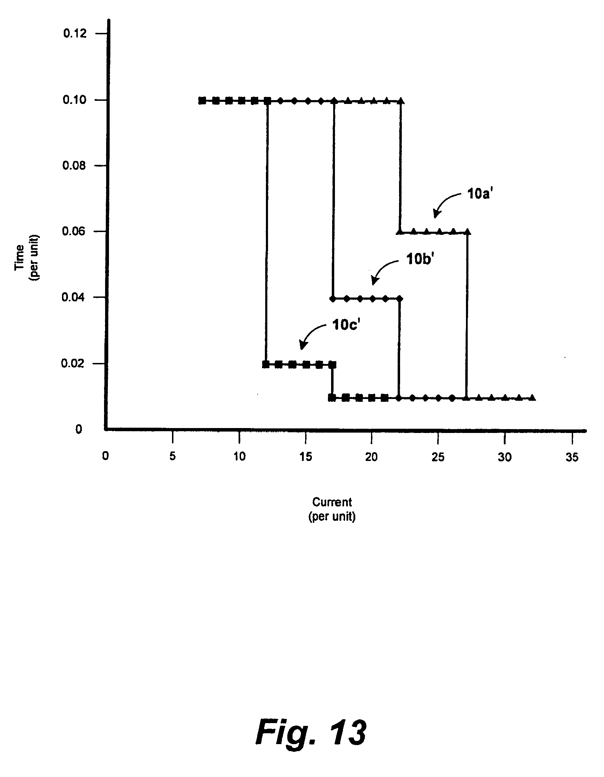

Further the power distribution system 25 may employ a number of circuit breakers which have the different breakpoint delay time factors and different pick-up current factors. Figure 13, for example, illustrates the time-trip curves of three circuit breakers (10a', 10b', 10c') superimposed on a single graph. As shown in Figure 13, circuit breaker 10c' has a breakpoint delay time factor of approximately 0.02 and picks-up at a current factor of between about 12 and 17, circuit breaker 10b' has a breakpoint delay time factor of approximately 0.04 and picks-up at a current factor of between about 17 and 22, and circuit breaker 10a' has a breakpoint delay time factor of approximately 0.06 and picks-up at a current factor of between about 22 and 30.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

## Claims

1. An electrical switching apparatus comprising:
a housing;
separable contacts within said housing;
an operating mechanism structured to open and close said separable contacts; and
a trip assembly cooperating with said operating mechanism to trip open said separable contacts in response to a trip signal, said trip assembly comprising:
a sensor structured to sense current flowing through said separable contacts,
a number of breakpoint trip mechanisms providing a number of breakpoint trips in response to a number of time-current functions of said sensed current over a number of ranges of predetermined values of said sensed current; and
a mechanism structured to provide said trip signal responsive to said number of breakpoint trips.

2. The electrical switching apparatus of Claim 1 wherein said trip assembly further comprises:
an array comprising a number of zener diodes and a number of resistors;
wherein at least one of said zener diodes is structured to enable generation of said trip signal in response to an overcurrent condition.

3. The electrical switching apparatus of Claim 2 wherein said trip assembly further comprises:
a capacitor electrically interconnected with said array,
wherein said capacitor and at least one of said resistors are structured to delay generation of said trip signal.

4. The electrical switching apparatus of Claim 2 wherein each of said zener diodes has a break over voltage associated therewith; and wherein at least one of said zener diodes is electrically connected in series with at least one of said resistors.

5. The electrical switching apparatus of Claim 2 wherein said array comprises:
a first zener diode having a first break over voltage associated therewith; and
a second zener diode having a second break over voltage associated therewith, said second zener diode being electrically connected in series with at least one of said resistors,
wherein the series combination of said second zener diode and said at least one of said resistors is electrically connected in parallel with said first zener diode.

6. The electrical switching apparatus of Claim 5 wherein said first break over voltage is greater than said second break over voltage.

7. The electrical switching apparatus of Claim 5 wherein said array further comprises:
a third zener diode having a third break over voltage associated therewith, said third zener diode being electrically connected in series with at least another one of said resistors,
wherein the series combination of said third zener diode and said at least another one of said resistors is electrically connected in parallel with said first zener diode and is electrically connected in parallel with the series combination of said second zener diode and said at least one of said resistors.

8. The electrical switching apparatus of Claim 7 wherein said first break over voltage is greater than said second break over voltage which is greater than said third break over voltage; and wherein the resistance of said at least one of said resistors is less than the resistance of said at least another one of said resistors.

9. The electrical switching apparatus of Claim 1 wherein said trip assembly further comprises at least one of:
a short delay trip mechanism providing a short delay trip;
a long delay trip mechanism providing a long delay trip; and
an instantaneous trip mechanism providing an instantaneous trip.

10. A power distribution system comprising:
a first bus having a first electrical switching apparatus associated therewith; and
a second bus having a second electrical switching apparatus associated therewith, said second bus being upstream of said first bus,
wherein said second electrical switching apparatus is associated with a time-trip curve having a number of breakpoint trip-curve functions.

11. The power distribution system of Claim 10 wherein said first electrical switching apparatus is associated with a time-trip curve having a number of breakpoint trip-curve functions.

12. The power distribution system of Claim 11 wherein the breakpoint trip-curve functions associated with said first electrical switching apparatus and the breakpoint trip-curve functions associated with said second electrical switching apparatus have at least one of:
different breakpoint delay time factors;
different pick-up current factors; and
different breakpoint delay time factors and different pick-up current factors

13. The power distribution system of Claim 10 wherein said second electrical switching apparatus comprises:
a housing;
separable contacts within said housing;
an operating mechanism structured to open and close said separable contacts; and
a trip assembly cooperating with said operating mechanism to trip open said separable contacts in response to a trip signal, said trip assembly comprising:
a sensor structured to sense current flowing through said separable contacts,
a number of breakpoint trip mechanisms providing a number of breakpoint trips in response to a number of time-current functions of said sensed current over a number of ranges of predetermined values of said sensed current; and
a mechanism structured to provide said trip signal responsive to said number of breakpoint trips.

14. The power distribution system of Claim 13 wherein said trip assembly further comprises:
an array comprising a number of zener diodes and a number of resistors;
wherein at least one of said zener diodes is structured to enable generation of said trip signal in response to an overcurrent condition.

15. The power distribution system of Claim 14 wherein said trip assembly further comprises:
a capacitor electrically interconnected with said array,
wherein said capacitor and at least one of said resistors are structured to delay generation of said trip signal.

16. The power distribution system of Claim 14 wherein each of said zener diodes has a break over voltage associated therewith; and wherein at least one of said zener diodes is paired with at least one of said resistors.

17. The power distribution system of Claim 14 wherein said array comprises:
a first zener diode having a first break over voltage associated therewith; and
a second zener diode having a second break over voltage associated therewith, said second zener diode being electrically connected in series with at least one of said resistors,
wherein the series combination of said second zener diode and said at least one of said resistors is electrically connected in parallel with said first zener diode.

18. The power distribution system of Claim 17 wherein said first break over voltage is greater than said second break over voltage.

19. The power distribution system of Claim 13 wherein said trip assembly further comprises at least one of:
a short delay trip mechanism providing a short delay trip;
a long delay trip mechanism providing a long delay trip; and
an instantaneous trip mechanism providing an instantaneous trip.

20. A method for generating a trip signal in an electrical switching apparatus, said method comprising:
sensing a current flowing through separable contacts of said electrical switching apparatus; and
providing a number of breakpoint trips in response to a number of first time-current functions of said sensed current over a number of ranges of first predetermined values of said sensed current.

21. The method of Claim 20 further comprising at least one of:
providing a short delay trip in response to a second time-current function of a sensed current over a range of second predetermined values of said sensed current;
providing a long delay trip in response to a third time-current function of a sensed current over a range of third predetermined values of said sensed current; and
providing an instantaneous trip in response to a fourth third time-current function of said sensed current over a range of third predetermined values of said sensed current;
wherein said ranges of first predetermined values being greater than said range of second predetermined values and said range of third predetermined values and being less than said range of fourth predetermined values.
